# EUROPEAN PATENT APPLICATION

(11) **EP 1 377 046 A2**
(43) Date of publication of application: **02.01.2004**
(21) Application number: 03010491.3
(22) Date of filing: 09.05.2003
(51) Int. Cl.: H04N 5/445, G06F 17/30

(54) **Program guide data text search**

(30) Priority: 25.06.2002 US 179714
(71) Applicant: MICROSOFT CORPORATION, Redmond, Washington 98052-6399 (US)
(72) Inventor: Barrett, Peter T., San Francisco, CA 94117 (US); Wolff, Adam, San Francisco, CA 94114 (US)
(74) Representative: Grünecker, Kinkeldey, Stockmair & Schwanhäusser Anwaltssozietät

(57) **Abstract**

A program guide data text search system generates a directed acyclic word graph that includes words from program guide data. When receiving a request to search for and display programming information, the directed acyclic word graph is searched to determine whether the requested information is included in the program guide data. An indication is provided to notify a viewer whether or not the requested information is available in the program guide data.

## Description

### TECHNICAL FIELD

This invention relates to television-based entertainment and information architectures and, in particular, to program guide data text search.

### BACKGROUND

Television-based entertainment and information systems include client devices that receive program guide data which is information that describes programs such as television shows and movies. Program guide data can include such information as program titles, descriptions of the programs, station and channel identifiers, and other schedule information. Additionally, program guide data may include video on-demand content information, such as movie schedules, as well as application information, such as for interactive games, and other programming information that may be of interest to a viewer.

A program guide application processes the program guide data to generate an electronic or interactive program guide which enables a television viewer to navigate through a display of the programming information and locate programs such as television shows and video on-demand movies. With an onscreen program guide, the television viewer can look at schedules of current and future programming, set reminders for upcoming programs, and/or enter instructions to record one or more television shows or video on-demand movies.

Additionally, a television viewer can request information about a particular program, or request a search for information about the particular program or for other programming information. When a request is received to search for such information, the program guide application searches the program guide data in an effort to locate the requested information. If the requested information is not available in the program guide data, or if the program guide data includes a large quantity of information, the search can appear to stall or time-out leaving the viewer uncertain as to the search status and/or the system operational state. The program guide data may typically include programming information for seven days up to as many as fourteen days. Searching such an extensive amount of program guide data is increasingly onerous when searching with the limited processing capabilities of a low-end client device.

Accordingly, for television-based entertainment and information systems, there is a need for a technique to quickly search program guide data and provide a viewer response that indicates whether requested information is available in the program guide data.

### SUMMARY

A program guide data text search system generates a directed acyclic word graph that includes words from program guide data. When receiving a request to search for and display programming information, the directed acyclic word graph is searched to determine whether the requested information is included in the program guide data. An indication is provided to notify a viewer whether or not the requested information is available in the program guide data. In an implementation, the requested information can be located in the program guide data and returned for display after determining that the requested information is included in the program guide data.

### BRIEF DESCRIPTION OF THE DRAWINGS

The same numbers are used throughout the drawings to reference like features and components.

Fig. 1 illustrates an exemplary system architecture in which the systems and methods for program guide data text search can be implemented.

Fig. 2 illustrates various components of an exemplary program guide data text search system.

Fig. 3 illustrates exemplary program guide data and exemplary directed acyclic word graphs corresponding to the program guide data.

Fig. 4 is a flow diagram that illustrates a method for program guide data text search.

### DETAILED DESCRIPTION

A program guide data text search system is described that generates directed acyclic word graphs each including words and/or word strings from program guide data. Each directed acyclic word graph corresponds to a day of programming from the program guide data. When a request is received to display information corresponding to a particular program, such as from a viewer requesting programming information, the directed acyclic word graphs are searched to determine whether the requested information is included in the program guide data. An indication is provided to quickly notify the viewer whether or not the information is available in the program guide data.

In an implementation, the program guide data can be searched for the requested information after determining that the information is available in the program guide data. When the requested information is located in the program guide data, the requested information is returned for viewer display. The format of the directed acyclic word graphs enables very fast word searches while representing the program guide data in a dense form. Accordingly, a viewer receives a very fast response as to whether requested programming information will be available or not.

The following discussion is directed to television-based entertainment and information systems, such as interactive TV networks, cable networks, and Web-enabled TV networks that utilize electronic and interactive program guides. Client devices in such systems range from full-resource clients with substantial memory and processing resources, such as TV-enabled personal computers and TV recorders equipped with hard-disks, to low-resource clients with limited memory and/or processing resources, such as traditional set-top boxes. While aspects of the described systems and methods can be used in any of these systems and for any types of client devices, they are described in the context of the following exemplary environment.

### Exemplary System Architecture

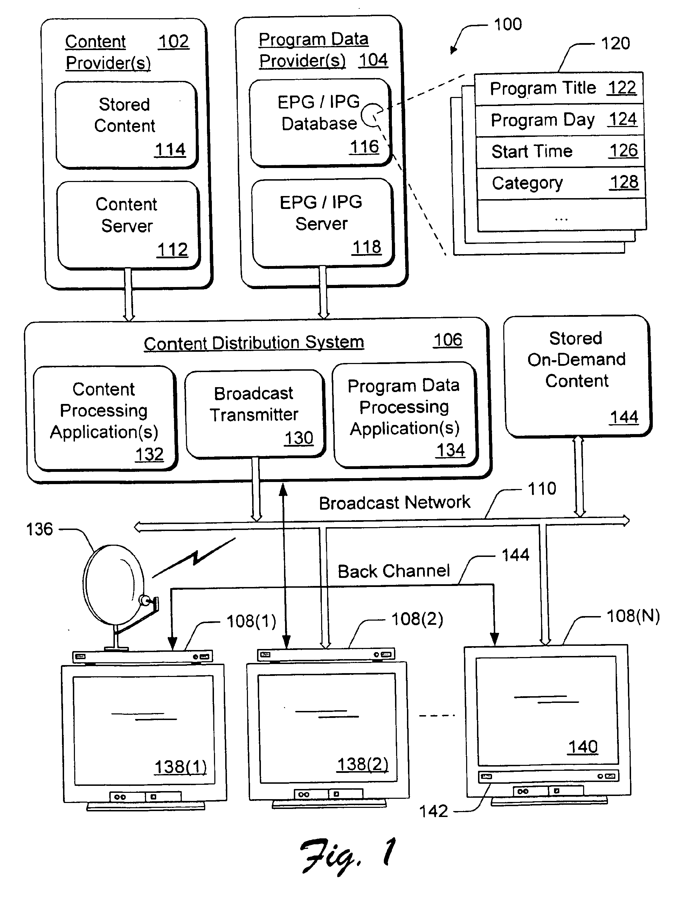

Fig. 1 illustrates an exemplary television entertainment system 100 that is an architecture in which program guide data text search can be implemented. System 100 facilitates distribution of content and program data to multiple viewers, and includes components to further facilitate program guide data text search. The system 100 includes one or more content providers 102, one or more program data providers 104, a content distribution system 106, and multiple client devices 108(1), 108(2), ..., 108(N) coupled to the content distribution system 106 via a broadcast network 110.

Content provider 102 includes a content server 112 and stored content 114, such as movies, television programs, commercials, music, and similar audio and/or video content. Content server 112 controls distribution of the stored content 114 from content provider 102 to the .content distribution system 106. Additionally, content server 112 controls distribution of live content (e.g., content that was not previously stored, such as live feeds) and/or content stored at other locations to the content distribution system 106. Program data provider 104 includes an electronic program guide (EPG) and/or Interactive Program Guide (IPG) database 116 and an EPG and/or IPG server 118. The program guide database 116 stores electronic files of program data which is used to generate an electronic or interactive program guide (or, "program guide").

An electronic file maintains program guide data 120 (or, "EPG data", or "IPG data") that may include a program title 122, program broadcast day(s) 124 to identify which days of the week the program will be shown, program start times(s) 126 to identify a time that the program will be shown on the particular day or days of the week, and a program category 128. A program category describes the genre of a program and categorizes it as a particular program type. For example, a program can be categorized as a movie, a comedy, a sporting event, a news program, a sitcom, a talk show, or as any number of other category descriptions. Program guide data can also include program ratings, characters, descriptions, actor names, station identifiers, channel identifiers, other schedule information, and so on. Additionally, program guide data may include video on-demand content information, such as movie schedules, as well as application information, such as for interactive games, and other programming information that may be of interest to a viewer.

The program guide server 118 processes the program data prior to distribution to generate a published version of the program guide data which can contain programming information for all broadcast channels and on-demand content listings for one or more days. The processing may involve any number of techniques to reduce, modify, or enhance the program guide data. Such processes might include selection of content, content compression, format modification, and the like. The program guide server 118 controls distribution of the published version of the program guide data from program data provider 104 to the content distribution system 106 using, for example, a file transfer protocol (FTP) over a TCP/IP network (e.g., Internet or Intranet). Further, the published version of the program guide data can be transmitted from program data provider 104 via a satellite and the content distribution system 106 directly to a client device 108.

Content distribution system 106 includes a broadcast transmitter 130, one or more content processing applications 132, and one or more program data processing applications 134. Broadcast transmitter 130 broadcasts signals, such as cable television signals, across broadcast network 110. Broadcast network 110 can include a cable television network, RF, microwave, satellite, and/or data network, such as the Internet, and may also include wired or wireless media using any broadcast format or broadcast protocol. Additionally, broadcast network 110 can be any type of network, using any type of network topology and any network communication protocol, and can be represented or otherwise implemented as a combination of two or more networks.

A content processing application 132 processes the content received from content provider 102 prior to transmitting the content across broadcast network 110. Similarly, a program data processing application 134 processes the program guide data received from program data provider 104 prior to transmitting the program guide data across broadcast network 110. A particular content processing application 132 may encode, or otherwise process, the received content into a format that is understood by the multiple client devices 108(1), 108(2), ..., 108(N) coupled to broadcast network 110. Although Fig. 1 shows a single content provider 102, a single program data provider 104, and a single content distribution system 106, exemplary system 100 can include any number of content providers and/or program data providers coupled to any number of content distribution systems.

Content distribution system 106 is representative of a headend service that provides EPG and/or IPG data, as well as content, to multiple subscribers. Each content distribution system 106 may receive a slightly different version of the program guide data that takes into account different programming preferences and lineups. The program guide server 118 can create different versions of an electronic or interactive program guide that includes those channels of relevance to respective headend services, and the content distribution system 106 transmits the electronic or interactive program guide data to the multiple client devices 108(1), 108(2), ..., 108(N). In one implementation, for example, content distribution system 106 utilizes a carousel file system to repeatedly broadcast the program data over an out-of-band (OOB) channel to the client devices 108. Alternatively, the multiple client devices 108(1), 108(2), ..., 108(N) can receive standard, or uniform, program guide data and individually determine the program guide data to display based on the associated headend service.

Client devices 108 can be implemented in a number of ways. For example, a client device 108(1) receives broadcast content from a satellite-based transmitter via a satellite dish 136. Client device 108(1) is also referred to as a set-top box or a satellite receiving device. Client device 108(1) is coupled to a television 138(1) for presenting the content received by the client device (e.g., audio data and video data), as well as a graphical user interface. A particular client device 108 can be coupled to any number of televisions 138 and/or similar devices that can be implemented to display or otherwise render content. Similarly, any number of client devices 108 can be coupled to a single television 138.

Client device 108(2) is also coupled to receive broadcast content from broadcast network 110 and provide the received content to associated television 138(2). Client device 108(N) is an example of a combination television 140 and integrated set-top box 142. In this example, the various components and functionality of the set-top box are integrated into the television, rather than using two separate devices. The set-top box integrated into the television can receive broadcast signals via a satellite dish (similar to satellite dish 136) and/or via broadcast network 110. In alternate implementations, client devices 108 may receive broadcast signals via the Internet or any other broadcast medium, such as back channel 144 which can be implemented as a Internet protocol (IP) connection or as other protocol connections using a modem connection and conventional telephone line, for example. Further, back channel 144 provides an alternate communication link between each of the client devices 108, and between the client devices 108 and the content distribution system 106.

The exemplary system 100 also includes stored on-demand content 144, such as Video On-Demand (VOD) movie content. The stored on-demand content can be viewed with a television 138 via a client device 108 through an onscreen movie guide, for example, and a viewer can enter instructions to stream a particular movie, or other stored content, to a corresponding client device 108.

### Exemplary Program Guide Data Text Search System

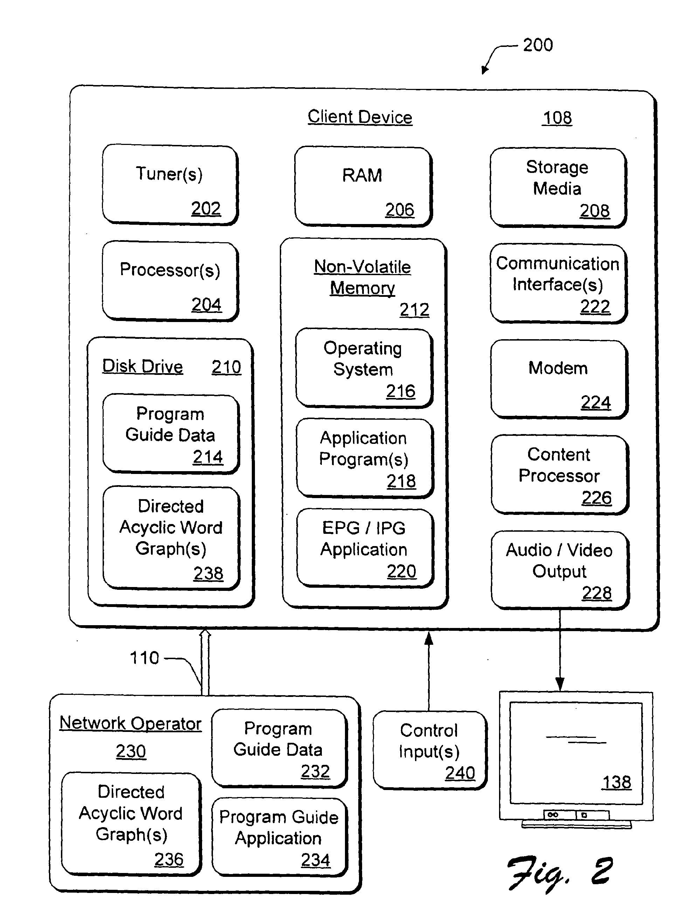

Fig. 2 illustrates an exemplary program guide data text search system 200 that includes selected components of television system 100, such as an exemplary client device 108 and a television 138. Client device 108 includes components to implement program guide data text search in a television-based entertainment and information system. Client device 108 can be implemented as a set-top box, a satellite receiver, a TV recorder with a hard disk, a digital video recorder (DVR) and playback system, a personal video recorder (PVR) and playback system, a game console, an information appliance, and as any number of similar embodiments.

Client device 108 includes one or more tuners 202 which are representative of one or more in-band tuners that tune to various frequencies or channels to receive television signals, as well as an out-of-band tuner that tunes to the broadcast channel over which the program data is broadcast to client device 108. Client device 108 also includes one or more processors 204 (e.g., microprocessors) which process various instructions to control the operation of client device 108 and to communicate with other electronic and computing devices.

Client device 108 can be implemented with one or more memory components, examples of which include a random access memory (RAM) 206, mass storage media 208, a disk drive 210, and a non-volatile memory 212 (e.g., ROM, Flash, EPROM, EEPROM, etc.). The memory components (e.g., RAM 206, storage media 208, disk drive 210, and non-volatile memory 212) store various information and/or data such as received content, program guide data 214, configuration information for client device 108, and/or graphical user interface information.

Alternative implementations of client device 108 can include a range of processing and memory capabilities, and may include any number and different memory components than those illustrated in Fig. 2. For example, full-resource clients can be implemented with substantial memory and processing resources, including the disk drive 210. Low-resource clients, however, may have limited processing and memory capabilities, such as a limited amount of RAM 206 and limited processing capabilities of a processor 204.

An operating system 216 and one or more application programs 218 can be stored in non-volatile memory 212 and executed on a processor 204 to provide a runtime environment. A runtime environment facilitates extensibility of client device 108 by allowing various interfaces to be defined that, in turn, allow application programs 218 to interact with client device 108. The application programs 218 that may be implemented in client device 108 can include a browser to browse the Web (e.g., "World Wide Web"), an email program to facilitate electronic mail, and so on.

An EPG and/or IPG application 220 is stored in memory 212 to process the program guide data 214 and generate a program guide. A program guide application 220 utilizes the program guide data 214 and enables a television viewer to navigate through an onscreen program guide and locate television shows, video on-demand movies, interactive game selections, and other media access information or content of interest to the viewer. With a program guide application 220, the television viewer can look at schedules of current and future programming, set reminders for upcoming programs, and/or enter instructions to record one or more television shows or video on-demand movies.

Client device 108 further includes one or more communication interfaces 222 and a PSTN, DSL, or cable modem 224. A communication interface 222 can be implemented as a serial and/or parallel interface, as a wireless interface, and/or as any other type of network interface. A wireless interface enables client device 108 to receive input commands and other information from a user-operated input device, such as from a remote control device or from another infrared (IR), 802.11, Bluetooth, or similar RF input device. Input devices can include a wireless keyboard or another handheld input device such as a personal digital assistant (PDA), handheld computer, wireless phone, or the like. A network interface and a serial and/or parallel interface enables client device 108 to interact and communicate with other electronic and computing devices via various communication links. Modem 224 facilitates client device 108 communication with other electronic and computing devices via a conventional telephone line, a DSL connection, or a cable modem.

Client device 108 also includes a content processor and/or decoder 226 to process and decode broadcast video signals, such as NTSC, PAL, SECAM, or other television system analog video signals, as well as a DVB, ATSC, or other television system digital video signals. Content processor 226 can also include a video decoder and/or additional processors to receive, decode, and/or process video content received from content distribution system 106 (Fig. 1) which is representative of a headend service that provides program guide data, as well as content, to multiple client devices 108. Content processor 226 can include an MPEG-2 or MPEG-4 (Moving Pictures Experts Group) decoder that decodes MPEG-encoded video content. MPEG supports a variety of audio/video formats, including legacy TV, HDTV (high-definition television), DVD (digital versatile disc), and five-channel surround sound.

Typically, video content includes video data and audio data that corresponds to the video data. Content processor 226 generates video and/or display content that is formatted for display on display device 138, and generates decoded audio data that is formatted for broadcast by a broadcast device, such as one or more speakers (not shown) in display device 138. Content processor 226 can include a display controller (not shown) that processes the video and/or display content to display corresponding images on display device 138. A display controller can include a microcontroller, integrated circuit, and/or similar video processing component to process the images. Client device 108 also includes an audio and/or video output 228 that provides the video and/or display signals to television 138 or to other devices that process and/or display, or otherwise render, the audio and video data. It is to be noted that the systems and methods described herein can be implemented for any type of encoding format as well as for data and/or content streams that are not encoded.

Although shown separately, some of the components of client device 108 may be implemented in an application specific integrated circuit (ASIC). Additionally, a system bus (not shown) typically connects the various components within client device 108. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

The exemplary program guide data text. search system 200 also includes a network operator 230 as an implementation of content distribution system 106 (Fig. 1) which is representative of a headend service that provides program guide data 232, as well as content, to client device 108. Network operator 230 includes a program guide application 234 (e.g., a program data processing application 134 as shown in Fig. 1) implemented to process program guide data 232 as well as implement the program guide data text search techniques described herein.

The program guide application 234 can be implemented as a software component that executes on a processor and is stored in a non-volatile memory device in network operator 230. Although program guide application 234 is illustrated and described as a single application configured to perform several functions of program guide data text search, the program guide application 234 can be implemented as several component applications distributed to each perform one or more functions in a computing device, a digital video recorder system, a personal video recorder system, and/or any other television-based entertainment and information system.

The program guide application 234 generates directed acyclic word graphs 236 which each include words from the program guide data 232 corresponding to a day of programming. For example, program guide data 232 can include programming information for several days, each of which are the basis for a directed acyclic word graph 236. The word graphs 236 are generated by the network operator 230 with the program guide application 234 when the network operator generates the program guide data for communication to the client device 108 via broadcast network 110. Client device 108 receives the program guide data and the associated directed acyclic word graphs 236 from network operator 230 and stores the program guide data 214 and the associated directed acyclic word graphs 238 in disk drive 210.

Although this example describes generating the directed acyclic word graphs 236 at the network operator 230 before communicating the program guide data to a client device, the client device 108 can also receive the program guide data and generate the directed acyclic word graphs 238 while receiving the program guide data or after receiving the program guide data. A program guide application 220 in client device 108 can also be configured to implement the program guide data text search techniques described herein.

A viewer can initiate a control input 240 to search for a particular program, to search for programming information, and/or to request that information corresponding to a particular program be displayed. The program guide application 220 can receive viewer commands as control inputs 240 such as from a viewer-operated remote control device or other handheld control device. The input commands (e.g., control inputs 240) may be input via an RF, IR, Bluetooth, or similar communication link or other mode of transmission to communicate with program guide application 220.

When the program guide application 220 receives a viewer request to search for and display programming information, or information corresponding to a particular program, the program guide application 220 searches the directed acyclic word graphs 238 to determine whether the requested information is included, or will be located, in the program guide data 214. The directed acyclic word graphs 238 can be searched for information, such as a word or a word string, much faster than the program guide data 214 can be searched for the information. After a search of the directed acyclic word graphs 238, the program guide application 220 can return an indication as to whether the requested information is included in the program guide data 214 to provide a quick response to the viewer.

The program guide application 220 can return an indication such as a notification that the requested information is not currently available in the program guide data 214, a notification that the requested information is available, and/or search for and return the program guide data corresponding to the requested information if the information is located in the directed acyclic word graphs 238. The notifications and program guide information can be processed for display on display device 138 to provide feedback to the viewer request.

### Exemplary Program Guide Data and Directed Acyclic Word Graphs

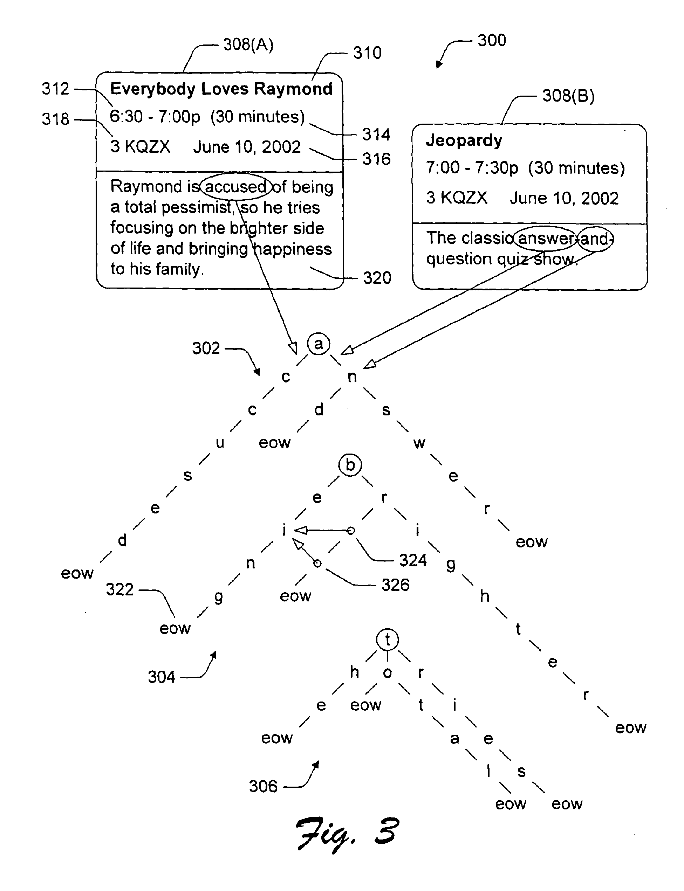

Fig. 3 illustrates exemplary program guide data 300 and associated directed acyclic word graphs 302, 304, and 306. The exemplary program guide data 300 is the programming schedule for one hour (6:30-7:30p) on a broadcast channel (3 KQZX) for one day (June 10, 2002). The example program guide data 300 for each program 308(A and B) includes a program title 310, a program start and stop time 312, a time duration 314 of the program, the program broadcast date 316, a channel identification 318 for the program broadcast, and a program description 320. Although not shown, program guide data 300 can also include other related programming information for each program 308. Further, an implementation of program guide data 214 and 232 (Fig. 2), such as program guide data 300, can include programming information for any number of hours, for one or more days, and/or for one or more weeks.

A directed acyclic word graph is a dictionary of words implemented as a data structure that enables very fast word searches while representing data in a dense form (typically one to two percent of the original data size). Words having a common first letter are represented together in a graph and the starting point for a search of a particular word is the first letter of the word. Each node in a graph represents a letter and a graph is traversed from one node to the next in succession to locate the particular word as each letter of the word is matched with nodes in the graph. A directed acyclic word graph is "directed" because a search traverses the graph in a specific direction between two or more nodes to form a word. For example, if a graph is searched from a node A to a node B, the graph is not searched in reverse from node B to node A. Further, the graph is acyclic because there are no cycles that may cause an endless loop when searching for a word. That is, there is not a traversal path from node A to node B to node C and then back to node A. A traversal link back to node A would create a cycle, or loop.

The directed acyclic word graphs 302, 304, and 306 are sections of a larger word graph that represents a programming day from the program guide data 300. The directed acyclic word graph 302 includes the words from the program descriptions 320 that begin with the letter "a". Similarly, directed acyclic word graph 304 includes the words from the program descriptions 320 that begin with the letter "b", and directed acyclic word graph 306 includes the words from the program descriptions 320 that begin with the letter "t". Although only directed acyclic word graphs are shown for the words from the program descriptions that begin with the letters "a", "b", and "t", a word graph that represents a complete programming day from program guide data 300 would include directed acyclic word graphs for each of the different letters that words from the program guide data begin with.

The directed acyclic word graph 304, which includes the words from the program guide data that begin with the letter "b", illustrates that each word in the graph includes an end-of-word indicator ("eow") 322. The word graph 304 also illustrates that words with common endings all end at the same node in the graph. For example, the word "being" includes the common ending "ing" which is also referenced by the representation for the word "bringing" which twice includes the common ending. A first reference 324 forms the word "bring" and a second reference 326 forms the word "bringing". Other common suffixes include "tion", "en", "ed", and any number of other combinations of letters that commonly occur.

Additionally, a directed acyclic word graph that represents a programming day from the program guide data 300 can include word strings to indicate words that are commonly found together in the program guide data. A space identifier, or character, can be defined to differentiate between commonly grouped words in a directed acyclic word graph such that the words can appear proximately as a single word string joined by the space identifier. For example, titles of programs are common from one programming day to the next, and are represented as word combinations that remain constant, such as program title 310.

### Methods for Program Guide Data Text Search

Methods for program guide data text search may be described in the general context of computer-executable instructions performed by a program guide application in client device 108 and/or network operator 230. Generally, computer-executable instructions include routines, programs, objects, components, data structures, and the like that perform particular functions or implement particular abstract data types. Methods for program guide data text search may also be practiced in distributed computing environments where functions are performed by remote processing devices that are linked through a communications network. In a distributed computing environment, computer-executable instructions may be located in both local and remote computer storage media, including memory storage devices.

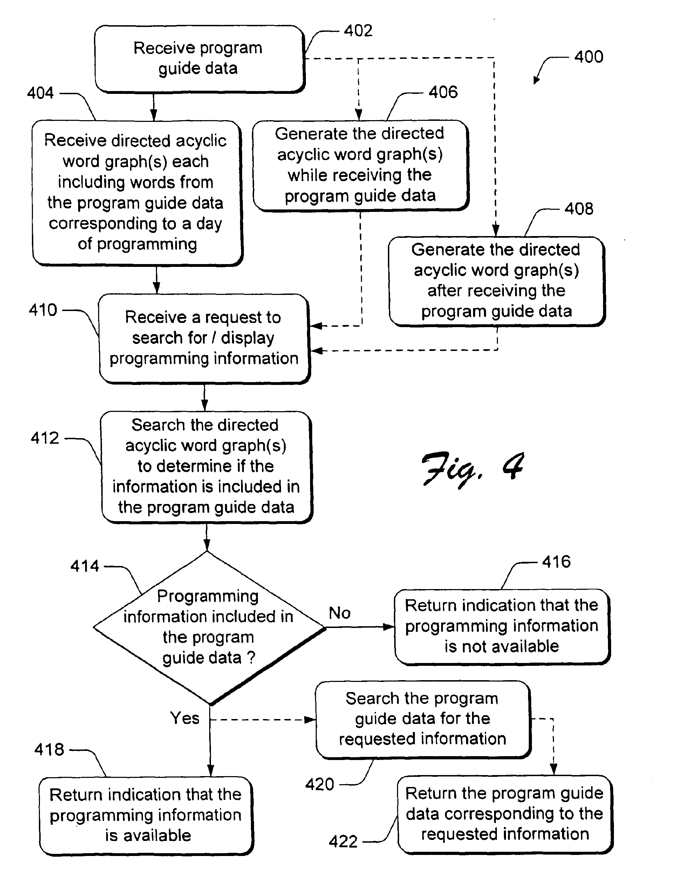

Fig. 4 illustrates a method 400 for program guide data text search. The order in which the method is described is not intended to be construed as a limitation, and any number of the described method blocks can be combined in any order to implement the method. Furthermore, the method can be implemented in any suitable hardware, software, firmware, or combination thereof.

At block 402, program guide data is received. For example, client device 108 receives program guide data 232 from network operator 230 via broadcast network 110 and stores the program guide data 214 in disk drive 210 (Fig. 2). At block 404, one or more directed acyclic word graphs are received where each directed acyclic word graph includes words from the program guide data corresponding to a day of programming. For example, client device 108 receives directed acyclic word graphs 236 generated with program guide application 234 at the network operator 230 and stores the directed acyclic word graphs 238 in disk drive (Fig. 2).

Alternatively, at block 406, the one or more directed acyclic word graphs are generated while receiving the program data, or at block 408, the one or more directed acyclic word graphs are generated after receiving the program guide data. For example, client device 108 receives program guide data 232 from network operator 230 and program guide application 220 generates the directed acyclic word graphs 238 while receiving the program guide data, or after receiving the program guide data. The program guide application 220 in client device 108 generates the directed acyclic word graphs 238 to each include words from the program guide data corresponding to a day of programming.

At block 410, a request to display programming information is received. For example, client device 108 receives a viewer-initiated control input 240 (Fig. 2) to search for and display programming information, or search for information about a particular program. At block 412, the directed acyclic word graphs are searched for a word corresponding to the request, or for a word string corresponding to the request. At block 414, it is determined whether the programming information is included in the program guide data when searching the directed acyclic word graphs for the requested information. For example, program guide application 220 in client device 108 searches the directed acyclic word graphs 238 stored in disk drive 210 to quickly determine whether or not to search the program guide data 214 for the requested information.

If the requested information (e.g., a word or word string) is not located in the one or more directed acyclic word graphs (i.e., "no" from block 414), a notification is returned at block 416 to indicate that the programming information is not available if a word or word string corresponding to the request is not located in the directed acyclic word graphs. If the programming information is located in the directed acyclic word graphs (i.e., "yes" from block 414), a notification is returned at block 418 to indicate that the programming information is available in the program guide data. For example, program guide application 220 generates a notification for display on display device 138 (Fig. 2) to quickly notify a viewer that the requested programming information is or is not available.

In addition to returning a notification that the information is available at block 418, or instead of returning the notification, the program guide data is searched for the requested information at block 420 if a word or word string corresponding to the request is located in the directed acyclic word graphs. At block 422, the program guide data corresponding to the request is returned if a word or word string corresponding to the requested programming information is located in the directed acyclic word graphs. For example, program guide application 220 in client device 108 locates the programming information requested by the viewer if a word or word string corresponding to the request is located in the directed acyclic word graphs and routes the programming information for display on display device 138 (Fig. 2).

### Conclusion

Although the invention has been described in language specific to structural features and/or methods, it is to be understood that the invention defined in the appended claims is not necessarily limited to the specific features or methods described. Rather, the specific features and methods are disclosed as preferred forms of implementing the claimed invention.

## Claims

1. A method, comprising:
receiving a request to display programming information;
determining whether the programming information is included in program guide data by searching a directed acyclic word graph generated from the program guide data; and
returning an indication as to whether the programming information is included in the program guide data.

2. A method as recited in claim 1, wherein determining includes searching the directed acyclic word graph for a word corresponding to the request.

3. A method as recited in claim 1, wherein determining includes searching the directed acyclic word graph for a word string corresponding to the request.

4. A method as recited in claim 1, wherein determining includes searching at least a second directed acyclic word graph for a word corresponding to the request.

5. A method as recited in claim 1, wherein returning includes returning a notification that the programming information is not available if a word corresponding to the request is not located in the directed acyclic word graph.

6. A method as recited in claim 1, wherein returning includes returning a notification that the programming information is not available if a word string corresponding to the request is not located in the directed acyclic word graph.

7. A method as recited in claim 1, wherein returning includes returning a notification that the programming information is available if a word corresponding to the request is located in the directed acyclic word graph.

8. A method as recited in claim 1, wherein returning includes returning a notification that the programming information is available if a word string corresponding to the request is located in the directed acyclic word graph.

9. A method as recited in claim 1, wherein returning includes returning program guide data corresponding to the request if a word corresponding to the request is located in the directed acyclic word graph.

10. A method as recited in claim 1, wherein returning includes returning program guide data corresponding to the request if a word string corresponding to the request is located in the directed acyclic word graph.

11. A method as recited in claim 1, further comprising searching the program guide data for the programming information if a word corresponding to the request is located in the directed acyclic word graph, and wherein returning includes returning the programming information.

12. A method as recited in claim 1, further comprising searching the program guide data for the programming information if a word string corresponding to the request is located in the directed acyclic word graph, and wherein returning includes returning the programming information.

13. A method as recited in claim 1, further comprising receiving the directed acyclic word graph along with the program guide data.

14. A method as recited in claim 1, further comprising receiving one or more directed acyclic word graphs each including words from the program guide data corresponding to a day of programming.

15. A method as recited in claim 1, further comprising generating one or more directed acyclic word graphs each including words from the program guide data corresponding to a day of programming.

16. A method as recited in claim 1, further comprising generating the directed acyclic word graph with words included in the program guide data after receiving the program guide data.

17. A method as recited in claim 1, further comprising generating the directed acyclic word graph with words included in the program guide data while receiving the program guide data.

18. One or more computer-readable media comprising computer-executable instructions that, when executed, direct a digital video recording system to perform the method of claim 1.

19. One or more computer-readable media comprising computer-executable instructions that, when executed, direct a computing device to perform the method of claim 1.

20. A program guide data text search system, comprising:
a memory device configured to maintain program guide data and one or more directed acyclic word graphs each including words from the program guide data corresponding to a day of programming;
a program guide application configured to:
receive a request to display programming information;
search the one or more directed acyclic word graphs to determine whether the programming information is included in the program guide data; and
return an indication as to whether the programming information is included in the program guide data.

21. A program guide data text search system as recited in claim 20, wherein the program guide application is further configured to search the one or more directed acyclic word graphs for a word corresponding to the request.

22. A program guide data text search system as recited in claim 20, wherein the program guide application is further configured to search the one or more directed acyclic word graphs for a word string corresponding to the request.

23. A program guide data text search system as recited in claim 20, wherein the program guide application is further configured to return a notification that the programming information is not available if a word corresponding to the request is not located in the one or more directed acyclic word graphs.

24. A program guide data text search system as recited in claim 20, wherein the program guide application is further configured to return a notification that the programming information is not available if a word string corresponding to the request is not located in the one or more directed acyclic word graphs.

25. A program guide data text search system as recited in claim 20, wherein the program guide application is further configured to return a notification that the programming information is available if a word corresponding to the request is located in the one or more directed acyclic word graphs.

26. A program guide data text search system as recited in claim 20, wherein the program guide application is further configured to return a notification that the programming information is available if a word string corresponding to the request is located in the one or more directed acyclic word graphs.

27. A program guide data text search system as recited in claim 20, wherein the program guide application is further configured to return program guide data corresponding to the programming information if a word corresponding to the request is located in the one or more directed acyclic word graphs.

28. A program guide data text search system as recited in claim 20, wherein the program guide application is further configured to return program guide data corresponding to the programming information if a word string corresponding to the request is located in the one or more directed acyclic word graphs.

29. A program guide data text search system as recited in claim 20, wherein the program guide application is further configured to search the program guide data for the programming information if a word corresponding to the request is located in the one or more directed acyclic word graphs.

30. A program guide data text search system as recited in claim 20, wherein the program guide application is further configured to search the program guide data for the programming information if a word string corresponding to the request is located in the one or more directed acyclic word graphs.

31. A program guide data text search system as recited in claim 20, wherein the program guide application is further configured to generate the one or more directed acyclic word graphs.

32. A television-based system comprising the program guide data text search system as recited in claim 20.

33. A video recording system comprising the program guide data text search system as recited in claim 20.

34. A television-based system, comprising:
means for determining from a directed acyclic word graph whether programming information is included in program guide data; and
means for returning an indication as to whether the programming information is included in the program guide data.

35. A television-based system as recited in claim 34, wherein the means for determining includes means for determining whether a word corresponding to the programming information is included in the program guide data.

36. A television-based system as recited in claim 34, wherein the means for determining includes means for determining whether a word string corresponding to the programming information is included in the program guide data.

37. A television-based system as recited in claim 34, wherein the means for returning an indication includes means for returning a notification that the programming information is not available if a word corresponding to the programming information is not located in the directed acyclic word graph.

38. A television-based system as recited in claim 34, wherein the means for returning an indication includes means for returning a notification that the programming information is not available if a word string corresponding to the programming information is not located in the directed acyclic word graph.

39. A television-based system as recited in claim 34, wherein the means for returning an indication includes means for returning a notification that the programming information is available if a word corresponding to the programming information is located in the directed acyclic word graph.

40. A television-based system as recited in claim 34, wherein the means for returning an indication includes means for returning a notification that the programming information is available if a word string corresponding to the programming information is located in the directed acyclic word graph.

41. A television-based system as recited in claim 34, wherein the means for returning an indication includes means for returning the programming information from the program guide data if the programming information is located in the directed acyclic word graph.

42. A television-based system as recited in claim 34, further comprising means for searching the program guide data for the programming information if a word corresponding to the programming information is included in the directed acyclic word graph.

43. A television-based system as recited in claim 34, further comprising means for searching the program guide data for the programming information if a word string corresponding to the programming information is included in the directed acyclic word graph.

44. A television-based system as recited in claim 34, further comprising means for generating the directed acyclic word graph with words included in the program guide data.

45. A television-based system as recited in claim 34, further comprising means for generating the directed acyclic word graph with words and word strings included in the program guide data.

46. A personal video recorder comprising the television-based system as recited in claim 34.

47. One or more computer-readable media comprising computer-executable instructions that, when executed, direct a television-based client device to:
receive a request to display programming information;
determine from one or more directed acyclic word graphs whether the programming information is included in program guide data, the one or more directed acyclic word graphs each including words from the program guide data corresponding to a day of programming; and
provide an indication as to whether the programming information is included in the program guide data.

48. One or more computer-readable media as recited in claim 47, further comprising computer executable instructions that, when executed, direct the television-based client device to search the one or more directed acyclic word graphs for a word corresponding to the request.

49. One or more computer-readable media as recited in claim 47, further comprising computer executable instructions that, when executed, direct the television-based client device to search the one or more directed acyclic word graphs for a word string corresponding to the request.

50. One or more computer-readable media as recited in claim 47, further comprising computer executable instructions that, when executed, direct the television-based client device to generate the one or more directed acyclic word graphs.

51. One or more computer-readable media as recited in claim 47, further comprising computer executable instructions that, when executed, direct the television-based client device to provide the indication that the programming information is not available if a word corresponding to the request is not located in the one or more directed acyclic word graphs.

52. One or more computer-readable media as recited in claim 47, further comprising computer executable instructions that, when executed, direct the television-based client device to provide the indication that the programming information is available if a word corresponding to the request is located in the one or more directed acyclic word graphs.

53. One or more computer-readable media as recited in claim 47, further comprising computer executable instructions that, when executed, direct the television-based client device to return program guide data corresponding to the programming information if a word corresponding to the request is located in the one or more directed acyclic word graphs.

54. One or more computer-readable media as recited in claim 47, further comprising computer executable instructions that, when executed, direct the television-based client device to search the program guide data for the programming information if a word corresponding to the request is located in the one or more directed acyclic word graphs.
